# EUROPÄISCHE PATENTSCHRIFT

(11) **EP 3 132 909 B1**
(45) Veröffentlichungstag und Bekanntmachung des Hinweises auf die Patenterteilung: **09.10.2019**
(21) Anmeldenummer: 15181568.5
(22) Anmeldetag: 19.08.2015
(51) Int. Cl.: B29C 43/54, B29C 43/56, B29C 67/24

(54) **VERFAHREN UND WERKZEUG ZUR HERSTELLUNG VON ZIERTEILEN**
METHOD AND MOLD FOR MANUFACTURING DECORATIVE PARTS
PROCÉDÉ ET MOULAGE POUR LA FABRICATION DE PIECES EMBOUTIES

(43) Veröffentlichungstag der Anmeldung: 22.02.2017
(73) Patentinhaber: HIB Trim Part Solutions GmbH, 76646 Bruchsal (DE)
(72) Erfinder: Keller, Bernd, 76131 Karlsruhe (DE)
(74) Vertreter: Staeger & Sperling Partnerschaftsgesellschaft mbB

(56) Entgegenhaltungen:
- EP-A2- 1 566 253
- "Gespritz und veredelt in einem Aufwasch", , 30. März 2009 (2009-03-30), XP055239796, Gefunden im Internet: URL:https://www.kunststoffe.de/_storage/as set/540289/storage/master/file/10366293/do wnload/Gespritzt und veredelt in einem Aufwasch.pdf [gefunden am 2016-01-08]

## Beschreibung

Die Erfindung betrifft ein Verfahren zur Herstellung von Zierteilen mit einem rückseitigen Kunststoff-Trägerelement und einer auf die Vorderseite im Gießverfahren aufzubringenden Kunststoff-Oberschicht. Auch betrifft die Erfindung ein für das Verfahren angepasstes Gießwerkzeug.

Zierteile werden in Fahrzeuginnenräumen als Blendenelemente verwendet und weisen ein Trägerelement zur Befestigung am Fahrzeug sowie optional darauf aufgebrachte und zur Sichtseite weisende Materiallagen, wie beispielsweise Holzfurnierlagen, Aluminiumlagen, Kohlenstofffasermatten oder Leder auf. Die Materiallagen werden im Kunststoff-Gießwerkzeug mit Kunststoff übergossen, der als Oberschicht die Sichtseite des Zierteils bildet.

Aus dem Stand der Technik ist bekannt, die Trägerelemente im Spritzgussverfahren herzustellen. Aufgrund der häufig komplexen Geometrie wird die Rückseite des Trägerelements stark frei gemacht und verliert dabei zumindest abschnittsweise im erheblichen Maß an Stabilität und Festigkeit. Dabei ist problematisch, dass der beim Übergießen wirkende Prozessdruck des Kunststoffs auf die vorderseitige Sichtseite des Trägerelements dazu führt, dass sich das Trägerelement bereichsweise zur Rückseite durchwölbt. Dadurch erhöht sich die in diesen Bereichen aufgebrachte Kunststoffmenge der Oberschicht, wodurch sich die Bauteilwandstärke mit inhomogenen Übergängen zur benachbarten Oberfläche auf der Sichtseite lokal vergrößert. Dabei spielt es keine Rolle, ob die Oberschicht kompakt ausgebildet oder geschäumt wird. Sobald der Prozessdruck nach Abschluss des Gießverfahrens nachlässt, verformt sich das Trägerelement in seine ursprüngliche Lage zurück und die lokalen Vergrößerungen der Bauteilwandstärke werden als Überwölbung in die entgegengesetzte Richtung, praktisch als Hügel auf der Sichtseite erkennbar. Dabei reichen bereits Unterschiede der Bauteilwandstärke von wenigen Mikrometern, dass sie vom menschlichen Auge erfassbar sind. Die Unterschiede der Bauteilwandstärke müssen deshalb aufwendig mit zusätzlichen Nachbearbeitungsprozessen wieder entfernt werden.

Druckschriftlicher Stand der Technik aus dem vorliegenden technischen Gebiet ist aus der EP 1 566 253 A2 bekannt.

Der Erfindung liegt deshalb die Aufgabe zugrunde, ein Verfahren bereit zu stellen, mit dem Nachbearbeitungsschritte nach dem Übergießungsprozess mit Kunststoff vermieden werden und unmittelbar im Gießwerkzeug eine ebene Oberfläche erreicht wird. Ferner ist es Aufgabe der Erfindung, ein entsprechendes Gießwerkzeug bereit zu stellen.

Diese Aufgaben werden gelöst durch die Merkmalskombinationen gemäß der Patentansprüche 1 und 11.

Erfindungsgemäß wird ein Verfahren zur Herstellung von Zierteilen mit einem rückseitigen Kunststoff-Trägerelement vorgeschlagen, das in einem Gießwerkzeug zur Erzeugung einer Oberschicht auf einer vorderseitigen Sichtseite unter Prozessdruck mit Kunststoff übergossen wird, wobei das Trägerelement in dem Gießwerkzeug fixiert und zumindest während der Erzeugung der Oberschicht rückseitig und in Richtung der auf der vorderseitigen Sichtseite zu erzeugenden Oberschicht mit einem Druck beaufschlagt wird, der dem Prozessdruck beim Übergießen mit Kunststoff entgegenwirkt.

Der Druck auf die Rückseite des Trägerelements während dem Übergießungsprozess stabilisiert das Trägerelement und insbesondere seine materialgeschwächten Bereiche, so dass es sich beim Übergießen nicht durchwölbt, sondern über die ganze Zeit seine Ausgangsform bewahrt.

Besonders günstig ist eine Ausführungsvariante des erfindungsgemäßen Verfahrens, bei der das Trägerelement in dem Gießwerkzeug flächig, insbesondere vollflächig in Richtung der auf der Vorderseite zu erzeugenden Oberschicht mit Druck beaufschlagt wird. Der flächig wirkende Druck stabilisiert das Trägerelement während des Übergießungsprozesses in allen Bereichen und verhindert eine Wölbung sicher über die gesamte Oberfläche.

Erfindungsgemäß wird der Druck durch Druckgas, insbesondere Druckluft, erzeugt, das/die in eine Kavität zwischen einem Oberwerkzeug und dem Trägerelement gepresst wird. Druckgas bzw. Druckluft hat den besonderen Vorteil, dass es/sie im Gegensatz zu allen Flüssigkeiten keine Rückstände am Trägerelement hinterlässt und einfach Handhabbar ist. Druckluft ist die ökonomischste Variante.

Zur Gewährleistung einer Druckwirkung exklusiv auf die Rückseite des Trägerelements wird bei dem Verfahren vorgesehen, dass zwischen dem Oberwerkzeug und dem Trägerelement eine Dichtung angeordnet wird, welche die Kavität zumindest während der Erzeugung der Oberschicht abdichtet. Die Dichtung kann dabei an dem Werkzeug oder dem Trägerelement integriert oder als extra Bauteil vorgesehen werden.

Erfindungsgemäß ist in einer günstigen Ausführung der maximale Druck größer oder gleich dem maximalen Prozessdruck beim Übergießen. Dadurch ist sichergestellt, dass ein Durchwölben in Richtung Rückseite des Trägerelements ausgeschlossen ist. Als maximaler Druck werden bei spritzgegossenen Polymer-Trägerelementen beispielsweise 30bar aufgebracht.

Ferner ist in einer Ausführungsvariante vorgesehen, dass bei dem Verfahren der Druck aufrecht erhalten bleibt, solange der Prozessdruck des Übergießens wirkt. Der Druck kann jedoch auch wirken, bis die aus Kunststoff gegossene Oberschicht ausgehärtet ist.

Zum Anlegen und Steuern des Drucks bezüglich Höhe und Wirkzeit ist vorteilhafterweise eine Steuerung vorgesehen. Diese ermöglicht ferner, dass der Druck in mehreren Druckstufen mit unterschiedlichen Druckwerten aufgebracht wird. So ist ermöglicht, dass der aufgebrachte Druck nach Abschluss des Übergießens schrittweise reduziert wird, um Verformungen am Trägerelement so weit wie möglich auszuschließen.

Das Verfahren findet Anwendung mit Polyurethan als Übergießungs-Kunststoff, wobei sowohl kompakte, harte, weiche oder geschäumte PUR-Systeme einsetzbar sind. Die Kunststoffe können transparent, halbtransparent oder auch durchfärbt sein.

Auch können bei dem erfindungsgemäßen Verfahren alle aus dem Stand der Technik bekannten und gängigen Materiallagen (Folien, Furniere, Fasermatten, Leder, etc.) auf der Sichtseite des Trägerelements angeordnet und mit Kunststoff, insbesondere Polyurethan übergossen werden.

Auch Bestandteil der Erfindung ist ein zum Durchführen des vorstehend beschriebenen Herstellungsverfahrens angepasstes Gießwerkzeug mit einem Oberwerkzeug und einem Unterwerkzeug, die im geschlossenen Zustand zwischen sich einen Aufnahmehohlraum für das Trägerelement aufweisen, das auf einer zum Unterwerkzeug weisenden Sichtseite mit Kunststoff übergießbar ist, wobei das Oberwerkzeug einen sich von dem Aufnahmehohlraum nach außen erstreckenden Durchgang aufweist, an dem ein Druckgaserzeuger, vorzugsweise Drucklufterzeuger, anschließbar ist, so dass der Aufnahmehohlraum zumindest abschnittsweise mit Druckgas, insbesondere Druckluft beaufschlagbar ist. Das Gießwerkzeug bietet damit die Möglichkeit, auf die Rückseite des Trägerelements einen flächigen Druck aufzubauen, um die beschriebene technische Wirkung zu erreichen.

In einer Ausführungsform ist bei dem Gießwerkzeug ferner vorgesehen, dass in dem Oberwerkzeug auf einer zum Unterwerkzeug gerichteten Innenseite eine Nut vorgesehen ist, in die eine Dichtung zur Abdichtung der Kavität zwischen dem Trägerelement und dem Oberwerkzeug einbringbar ist. Somit kann die Kavität zur Drucklufterzeugung von dem Bereich des zu übergießenden Kunststoffs auf der Sichtseite des Trägerelements abgedichtet werden.

In einer alternativen Ausführung ist vorgesehen, dass das Gießwerkzeug selbst den Druckgaserzeuger aufweist. Dies kann beispielsweise durch eine Integration eines Luftkompressors erreicht werden, der mit dem Durchgang im Oberwerkzeug in Verbindung steht.

Auch ist die Steuerung in das Gießwerkzeug integrierbar, um die Höhe und Wirkzeit des von dem Druckgaserzeuger, insbesondere Drucklufterzeuger aufgebrachten Drucks zu steuern.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figur näher dargestellt. Es zeigt:

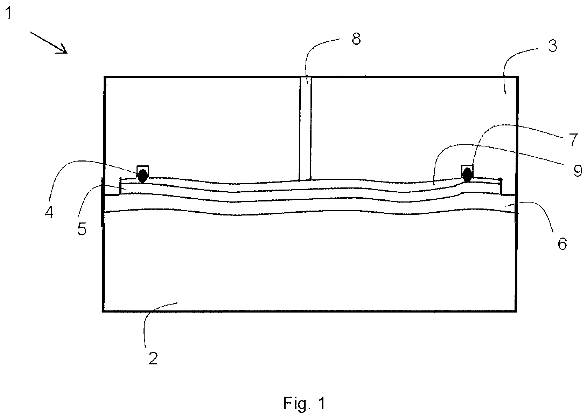

- Fig. 1: eine schematische Seitenansicht eines Gießwerkzeugs zur Durchführung des Verfahrens.

In Figur 1 ist beispielhaft schematisch eine Seitenansicht eines zweiteiligen Gießwerkzeugs 1 mit einem Oberwerkzeug 3 und einem Unterwerkzeug 2 dargestellt. Zwischen dem Oberwerkzeug 3 und dem Unterwerkzeug 2 ist im gezeigten geschlossenen Zustand ein Aufnahmehohlraum gebildet, in dem das Trägerelement 5 eingelegt und fixiert ist, so dass der Aufnahmehohlraum zwischen Trägerelement 5 und Unterwerkzeug 2 einen Freiraum 6 und zwischen Trägerelement 5 und Oberwerkzeug 3 eine Kavität 9 bildet. Das Trägerelement 5 wird im Gießwerkzeug 1 auf seiner zum Unterwerkzeug 2 weisenden Sichtseite zur Erzeugung der Oberschicht mit Polyurethan unter Prozessdruck übergossen, wobei der Prozessdruck in Richtung des Oberwerkzeugs 3 wirkt. Das Oberwerkzeug weist einen sich von dem Aufnahmehohlraum bzw. der Kavität 9 nach außen erstreckenden Durchgang 8 auf, an dem ein nicht dargestellter Kompressor angeschlossen ist, um das Trägerelement 5 zumindest während der Erzeugung der Oberschicht rückseitig und in Richtung des Unterwerkzeugs 2, d.h. der auf der vorderseitigen Sichtseite zu erzeugenden Oberschicht, über Druckluft mit einem Druck zu beaufschlagen, der dem Prozessdruck beim Übergießen mit Kunststoff entgegenwirkt. Zur Abdichtung der Kavität 9 ist zwischen dem Trägerelement 5 und dem Oberwerkzeug 3 eine Dichtung 4 eingelegt, die sich teilweise in einer an dem Oberwerkzeug 3 ausgebildeten und zum Unterwerkzeug 2 gerichteten Nut 7 erstreckt.

Bei dem Verfahren zur Herstellung des Zierteils wird beispielsweise das spritzgegossene Trägerelement mit auf der Sichtseite aufliegender Materiallage (Folie, Furnier, Fasermatte oder Leder, etc.) im Gießwerkzeug 1 derart fixiert, dass die Kavität 9 abgedichtet ist, und anschließend über den üblichen Prozessdruck Polyurethan in den Freiraum 6 gepresst. Gleichzeitig wird über den Durchgang 8 mittels Druckluft ein auf das Trägerelement 5 wirkender flächiger Gegendruck erzeugt und gehalten, bis der Prozessdruck verringert werden kann. Anschließend kann auch der Druck der Druckluft in mehreren Druckstufen angepasst werden. Der Zeitpunkt der Druckaufbringung ist variabel und über eine nicht dargestellte Steuerung auf den Prozess der Kunststoff- bzw. Polyurethaneinbringung anpassbar.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Beispielsweise sind Formen und Dicken des Trägerelements und der aufzubringenden Kunststoffschicht variabel. Auch umfasst sind unterschiedliche Spritzgusspolymere, Trägeraufbauten (homogen oder mehrschichtig), Trägerwandstärken, PUR Systeme (kompakt, aufgeschäumt, hart, weich), eine variable Anordnung der Dichtung, beispielsweise am Gießwerkzeug oder am Trägerelement, unterschiedliche Dichtungsmaterialien sowie variable Oberflächenstrukturen.

## Patentansprüche

1. Verfahren zur Herstellung von Zierteilen mit einem rückseitigen Kunststoff-Trägereiement (5), das in einem Gießwerkzeug (1) zur Erzeugung einer Oberschicht auf einer vorderseitigen Sichtseite unter Prozessdruck mit Kunststoff übergossen wird, **dadurch gekennzeichnet, dass** das Trägerelement (5) in dem Gießwerkzeug (1) fixiert und zumindest während der Erzeugung der Oberschicht rückseitig und in Richtung der auf der vorderseitigen Sichtseite zu erzeugenden Oberschicht mit einem Druck beaufschlagt wird, der dem Prozessdruck beim Übergießen mit Kunststoff entgegenwirkt, wobei der Druck durch Druckgas, insbesondere Druckluft, erzeugt wird, das/die in eine Kavität (9) zwischen einem Oberwerkzeug (3) und dem Trägerelement (5) gepresst wird.

2. Verfahren nach Anspruch 1, **dadurch gekennzeichnet, dass** das Trägerelement (5) in dem Gießwerkzeug (1) flächig in Richtung der auf der Vorderseite zu erzeugenden Oberschicht mit Druck beaufschlagt wird.

3. Verfahren nach Anspruch 1, **dadurch gekennzeichnet, dass** zwischen dem Oberwerkzeug (3) und dem Trägerelement (5) eine Dichtung (4) vorgesehen wird, welche die Kavität (9) zumindest während der Erzeugung der Oberschicht abdichtet.

4. Verfahren nach zumindest einem der vorigen Ansprüche, **dadurch gekennzeichnet, dass** ein maximaler Druck größer oder gleich einem maximalen Prozessdruck ist.

5. Verfahren nach zumindest einem der vorigen Ansprüche, **dadurch gekennzeichnet, dass** der Druck aufrecht erhalten bleibt, zumindest solange der Prozessdruck des Übergießens wirkt.

6. Verfahren nach zumindest einem der vorigen Ansprüche, **dadurch gekennzeichnet, dass** eine Steuerung vorgesehen ist, welche die Höhe des aufgebrachten Drucks steuert.

7. Verfahren nach zumindest einem der vorigen Ansprüche, **dadurch gekennzeichnet, dass** der Druck in mehreren Druckstufen mit unterschiedlichen Druckwerten aufgebracht wird.

8. Verfahren nach zumindest einem der vorigen Ansprüche, **dadurch gekennzeichnet, dass** der aufgebrachte Druck nach Abschluss des Übergießens schrittweise reduziert wird.

9. Verfahren nach zumindest einem der vorigen Ansprüche, **dadurch gekennzeichnet, dass** das Trägerelement (5) ein spritzgegossener Kunststoffträger ist.

10. Verfahren nach zumindest einem der vorigen Ansprüche, **dadurch gekennzeichnet, dass** als Kunststoff Polyurethan gegossen wird.

11. Gießwerkzeug zum Durchführen des Herstellungsverfahrens nach zumindest einem der vorigen Ansprüche, mit einem Oberwerkzeug (3) und einem Unterwerkzeug (2), die im geschlossenen Zustand zwischen sich einen Aufnahmehohlraum für das Trägerelement (5) aufweisen, das auf einer zum Unterwerkzeug (2) weisenden Sichtseite mit Kunststoff übergießbar ist, wobei das Oberwerkzeug (3) einen sich von dem Aufnahmehohlraum nach außen erstreckenden Durchgang (8) aufweist, an dem ein Druckgaserzeuger anschließbar ist, so dass der Aufnahmehohlraum zumindest abschnittsweise mit Druckgas, insbesondere Druckluft beaufschlagbar ist.

12. Gießwerkzeug nach dem vorigen Anspruch, **dadurch gekennzeichnet, dass** in dem Oberwerkzeug (3) auf einer zum Unterwerkzeug (2) gerichteten Innenseite eine Nut (7) vorgesehen ist, in die eine Dichtung (4) zur Abdichtung der Kavität (9) zwischen dem Trägerelement (5) und dem Oberwerkzeug (3) einbringbar ist.

13. Gießwerkzeug nach dem vorigen Anspruch 11 oder 12, **dadurch gekennzeichnet, dass** es den Druckgaserzeuger aufweist.

14. Gießwerkzeug nach einem der vorigen Ansprüche 11 bis 13, **dadurch gekennzeichnet, dass** es eine Steuerung aufweist, welche die Höhe des von dem Druckgaserzeuger aufgebrachten Drucks steuert.

## Claims

1. Method for producing decorative parts having a rear side plastic carrier element (5) being cast over with plastic in a casting tool (1) for producing an upper layer on a front side visible side under process pressure, **characterized in that** the carrier element (5) is fixed in the casting tool (1) and, at least during the production of the upper layer, is applied with pressure at the rear side and in the direction of the upper layer (1) to be produced on the front side visible side, which pressure counteracts the process pressure during the casting over with plastic, wherein said pressure is produced by compressed gas, in particular compressed air, being pressed into a cavity (9) between an upper tool (3) and the carrier element (5).

2. Method according to claim 1, **characterized in that** the carrier element (5) in the casting tool (1) is applied laminar with pressure in the direction of the upper layer to be produced on the front side.

3. Method according to claim 1, **characterized in that** a seal (4) is provided between the upper tool (3) and the carrier element (5), said seal (4) sealing the cavity (9) at least during the production of the upper layer.

4. Method according to at least one of the preceding claims, **characterized in that** a maximum pressure is greater than or equal to a maximum process pressure,

5. Method according to at least one of the preceding claims, **characterized in that** the pressure is maintained at least as long as the process pressure of the casting over is effective.

6. Method according to at least one of the preceding claims, **characterized in that** a control is provided controlling the level of applied pressure.

7. Method according to at least one of the preceding claims, **characterized in that** the pressure is applied in a plurality of pressure stages having different pressure values.

8. Method according to at least one of the preceding claims, **characterized in that** the applied pressure is reduced stepwise after completion of the casting over.

9. Method according to at least one of the preceding claims, **characterized in that** the carrier element (5) is an injection-cast plastic carrier.

10. Method according to at least one of the preceding claims, **characterized in that** polyurethane is cast as plastic.

11. Casting tool for carrying out the manufacturing method according to at least one of the preceding claims, having an upper tool (3) and a lower tool (2) having, in the closed state, a receiving cavity for the carrier element (5) between them, said carrier element (5) being castable over with plastic on a visible side facing the lower tool (2), said upper tool (3) having a passage (8) extending outwards from the receiving cavity, to which passage (8) a pressurized gas generator is connectable, so that the receiving cavity is applicable with pressurized gas, in particular compressed air, at least in sections.

12. Casting tool according to the preceding claim, **characterized in that** a groove (7) is provided in the upper tool (3) on an inner side directed towards the lower tool (2), into which groove (7) a seal (4) for sealing the cavity (9) between the carrier element (5) and the upper tool (3) is insertable.

13. Casting tool according to the previous claim 11 or 12, **characterized in that** it comprises the pressurized gas generator.

14. Casting tool according to one of the preceding claims 11 to 13, **characterized in that** it comprises a control controlling the level of pressure applied by the pressurized gas generator.

## Revendications

1. Procédé pour la fabrication de pièces embouties avec un élément support en plastique arrière (5), qui est recouvert de plastique dans un outil de moulage (1) pour la formation d'une couche supérieure sur un côté visible avant sous pression de processus, **caractérisé en ce que** l'élément support (5) est fixé dans l'outil de moulage (1) et est alimenté au moins pendant la formation de la couche supérieure côté arrière et en direction de la couche supérieure à former sur le côté visible avant avec une pression, qui contrecarre la pression de processus lors du recouvrement avec du plastique, dans lequel la pression est formée par gaz comprimé, en particulier air comprimé, qui est pressé dans une cavité (9) entre un outil supérieur (3) et l'élément support (5).

2. Procédé selon la revendication 1, **caractérisé en ce que** l'élément support (5) est soumis à pression dans l'outil de moulage (1) à plat en direction de la couche supérieure à former sur le côté avant.

3. Procédé selon la revendication 1, **caractérisé en ce qu'**un joint d'étanchéité (4), lequel étanchéifie la cavité (9) au moins pendant la formation de la couche supérieure, est prévu entre l'outil supérieur (3) et l'élément support (5).

4. Procédé selon au moins une quelconque des revendications précédentes, **caractérisé en ce qu'**une pression maximum est supérieure ou égale à une pression de processus maximum.

5. Procédé selon au moins une quelconque des revendications précédentes, **caractérisé en ce que** la pression est maintenue, du moins aussi longtemps que la pression de processus du recouvrement agit.

6. Procédé selon au moins une quelconque des revendications précédentes, **caractérisé en ce qu'**une commande est prévue, laquelle commande la hauteur de la pression appliquée.

7. Procédé selon au moins une quelconque des revendications précédentes, **caractérisé en ce que** la pression est appliquée en plusieurs niveaux de pression avec différentes valeurs de pression.

8. Procédé selon au moins une quelconque des revendications précédentes, **caractérisé en ce que** la pression appliquée est réduite progressivement après la fin du recouvrement.

9. Procédé selon au moins une quelconque des revendications précédentes, **caractérisé en ce que** l'élément support (5) est un support de plastique moulé par injection.

10. Procédé selon au moins une quelconque des revendications précédentes, **caractérisé en ce que** du polyuréthane est moulé comme plastique.

11. Outil de moulage pour la réalisation du procédé de fabrication selon au moins une quelconque des revendications précédentes, avec un outil supérieur (3) et un outil inférieur (2), qui à l'état fermé présentent entre eux une cavité de logement pour l'élément support (5), qui peut être recouvert de plastique sur un côté visible dirigé vers l'outil inférieur (2), dans lequel l'outil inférieur (3) présente un passage (8) s'étendant de la cavité de logement vers l'extérieur, au niveau duquel un générateur de gaz comprimé peut être raccordé de sorte que la cavité de logement peut être soumise au moins par section à un gaz comprimé, en particulier de l'air comprimé.

12. Outil de moulage selon la revendication précédente, **caractérisé en ce qu'**une rainure (7) est prévue dans l'outil supérieur (3) sur un côté intérieur dirigé vers l'outil inférieur (2), dans laquelle un joint d'étanchéité (4) peut être introduit pour l'étanchéification de la cavité (9) entre l'élément support (5) et l'outil supérieur (3).

13. Outil de moulage selon la revendication précédente 11 ou 12, **caractérisé en ce qu'**il présente un générateur de gaz comprimé.

14. Outil de moulage selon l'une quelconque des revendications précédentes 11 à 13, **caractérisé en ce qu'**il présente une commande, laquelle commande la hauteur de la pression appliquée par le générateur de gaz comprimé.
